# EUROPEAN PATENT APPLICATION

(11) **EP 4 661 179 A1**
(43) Date of publication of application: **10.12.2025**
(21) Application number: 24879938.9
(22) Date of filing: 23.08.2024
(51) Int. Cl.: H01M 50/242, H01M 50/533, H01M 50/531, H01M 50/211

(54) **BATTERY ASSEMBLY**

(30) Priority: 20.10.2023 KR 20230141269
(71) Applicant: LG Energy Solution, Ltd., Seoul 07335 (KR)
(72) Inventor: MUN, Ji-Seon, Daejeon 34122 (KR); HWANG, Jae-Cheol, Daejeon 34122 (KR)
(74) Representative: Plasseraud IP
(86) International application number: PCT/KR2024/012652
(87) International publication number: WO 2025/084598

(57) **Abstract**

Disclosed is a battery assembly. The battery assembly includes a first battery cell having a first accommodation portion configured to accommodate an electrode assembly, a first sealing portion extending forward from the first accommodation portion, and a first electrode lead protruding forward from the first sealing portion; a second battery cell having a second accommodation portion configured to accommodate an electrode assembly, a second sealing portion extending forward from the second accommodation portion, and a second electrode lead protruding forward from the second sealing portion and physically connected to the first electrode lead; and a frame having a lead support positioned between the first electrode lead and the second electrode lead to support a portion where the first electrode lead and the second electrode lead are connected.

## Description

### TECHNICAL FIELD

The present disclosure relates to a battery assembly.

This application is based on and claims priority from Korean Patent Application No. 10-2023-0141269, filed on October 20, 2023, with the Korean Intellectual Property Office, the disclosure of which is incorporated herein in its entirety by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby.

In particular, due to the swelling phenomenon in which the battery cell swells, the battery cell is easily physically damaged, and the risk of a thermal event occurring due to the damage to the battery cell may increase. Therefore, even if the swelling phenomenon occurs in the battery cell, it is necessary to suppress damage to the battery cell and reduce the risk of a thermal event occurring.

### DISCLOSURE

### Technical Problem

The present disclosure is designed to solve these and other problems.

The present disclosure is directed to providing a battery assembly with improved electrical safety.

The present disclosure is also directed to providing a battery assembly that may prevent damage to battery cells even when swelling occurs.

### Technical Solution

In one aspect of the present disclosure, there is provided a battery assembly comprising: a first battery cell having a first accommodation portion configured to accommodate an electrode assembly, a first sealing portion extending forward from the first accommodation portion, and a first electrode lead protruding forward from the first sealing portion; a second battery cell having a second accommodation portion configured to accommodate an electrode assembly, a second sealing portion extending forward from the second accommodation portion, and a second electrode lead protruding forward from the second sealing portion and physically connected to the first electrode lead; and a frame having a lead support positioned between the first electrode lead and the second electrode lead to support a portion where the first electrode lead and the second electrode lead are connected.

In addition, the first electrode lead may include a first connection portion configured to cover a front side of the lead support; and a first bending portion configured to connect the first connection portion and the first sealing portion, the second electrode lead may include a second connection portion configured to cover the front side of the lead support; and a second bending portion configured to connect the second connection portion and the second sealing portion, and the first connection portion may be coupled to the second connection portion.

In addition, the battery assembly may further comprise a welding portion configured to couple the first connection portion and the second connection portion.

In addition, the lead support may have an opening facing the welding portion.

In addition, the lead support may support the first connection portion and the second connection portion.

In addition, at least one of the first bending portion and the second bending portion may be configured to be bent multiple times.

In addition, the frame may include a terrace support configured to extend rearward from the lead support and support the first sealing portion and the second sealing portion.

In addition, the terrace support may support at least one of the first accommodation portion and the second accommodation portion.

In addition, the terrace support and the lead support may be formed integrally.

In addition, a width of the terrace support in a left and right direction may be smaller than a width of the lead support in the left and right direction.

In addition, the battery assembly may further comprise an elastic member located between the terrace support and the first accommodation portion.

In addition, the lead support may include a first part whose width in a left and right direction decreases as it goes rearward.

In addition, the lead support may further include a second part configured to extend rearward from the first part so that a width thereof in the left and right direction increases as it goes rearward.

In addition, the frame may include an accommodation portion provided below the lead support and configured to extend rearward and have an accommodation groove, and the first sealing portion may be accommodated in the accommodation groove.

A battery module according to one aspect of the present disclosure comprises the battery assembly of the present disclosure.

A battery pack according to one aspect of the present disclosure comprises the battery assembly of the present disclosure.

A vehicle according to another aspect of the present disclosure may include the battery assembly of the present disclosure.

### Advantageous Effects

According to at least one of the embodiments of the present disclosure, the electrical safety of the battery assembly may be improved.

According to at least one of the embodiments of the present disclosure, damage to the battery cell may be prevented.

According to at least one of the embodiments of the present disclosure, the service life of the battery assembly may be improved.

According to at least one of the embodiments of the present disclosure, the productivity of the battery assembly may be improved.

According to at least one of the embodiments of the present disclosure, the energy density of the battery assembly may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery assembly according to an embodiment of the present disclosure.
FIG. 2 is a drawing showing the battery assembly of FIG. 1, in which some components are exploded.
FIG. 3 is a drawing showing a frame of the battery assembly according to an embodiment of the present disclosure.
FIG. 4 is a drawing of the frame of FIG. 3, viewed from a different direction.
FIG. 5 is a top view showing some components of the battery assembly of the present disclosure.
FIG. 6 is an enlarged drawing showing a part A of FIG. 5.
FIG. 7 is an enlarged drawing showing the part A of FIG. 5 when swelling occurs.
FIG. 8 is a modified embodiment of the part A of FIG. 5.
FIG. 9 is a side view showing some components of the battery assembly of FIG. 5.
FIG. 10 is a drawing showing the alignment of a bending jig.
FIG. 11 is a drawing showing the bending of an electrode lead.
FIG. 12 is a drawing showing the folding of the electrode lead.
FIG. 13 is a drawing showing the alignment of a welding jig.
FIG. 14 is a drawing showing the welding of the electrode lead.
FIG. 15 is a drawing showing that the bending jig and the welding jig are disassembled.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

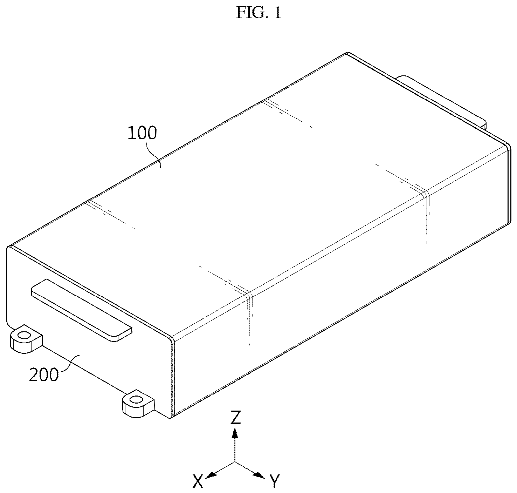

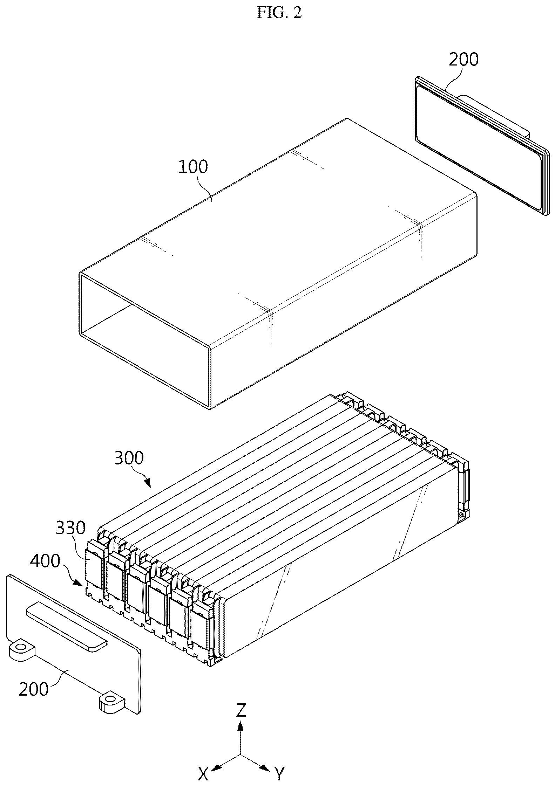

FIG. 1 is a drawing showing a battery assembly according to an embodiment of the present disclosure. FIG. 2 is a drawing showing the battery assembly of FIG. 1, in which some components are exploded. Referring to FIGS. 1 and 2, the battery assembly according to an embodiment of the present disclosure may include a first battery cell 300, a second battery cell 300, and a frame 400.

The first battery cell 300 and the second battery cell 300 may be collectively referred to as a battery cell 300. The battery cell 300 may mean a secondary battery. At this time, the battery may be a secondary battery having a pouch shape. The battery cell 300 may include an accommodation portion 310 that accommodates an electrode assembly. In addition, the battery cell 300 may include a sealing portion 320 extending forward from the accommodation portion 310. In addition, the battery cell 300 may have an electrode lead 330 protruding forward from the sealing portion 320.

The first battery cell 300 and the second battery cell 300 may be arranged to be adjacent to each other. The first battery cell 300 may be extended long along the front and rear direction or the X-axis direction. In addition, the second battery cell 300 may be extended long along the front and rear direction or the X-axis direction. The first accommodation portion 310a of the first battery cell 300 and the second accommodation portion 310b of the second battery cell 300 may face each other.

The first battery cell 300 may have a first accommodation portion 310a accommodating an electrode assembly, a first sealing portion 320a extending forward from the first accommodation portion 310a, and a first electrode lead 330a protruding forward from the first sealing portion 320a.

The second battery cell 300 may include a second accommodation portion 310b accommodating an electrode assembly, a second sealing portion 320b extending forward from the second accommodation portion 310b, and a second electrode lead 330b protruding forward from the second sealing portion 320b and physically connected to the first electrode lead 330a. Also, the first electrode lead 330a and the second electrode lead 330b may be electrically connected.

The frame 400 may have a lead support 410. The lead support 410 may be positioned between the first electrode lead 330a and the second electrode lead 330b. Also, the lead support 410 may support a portion where the first electrode lead 330a and the second electrode lead 330b are connected. The lead support 410 may be positioned very close to the portion where the first electrode lead 330a and the second electrode lead 330b are connected or may be in contact with the portion where the first electrode lead 330a and the second electrode lead 330b are connected.

According to this configuration of the present disclosure, the productivity of the battery assembly may be improved. The first electrode lead 330a and the second electrode lead 330b may be directly physically and electrically connected without a bus bar. This may reduce the number of parts in the battery assembly.

In addition, according to this configuration of the present disclosure, the weight of the battery assembly may be reduced as the bus bar is omitted. As a result, the volume and weight of the battery assembly may be reduced, and the energy density of the battery assembly may be improved.

In addition, according to this configuration of the present disclosure, since the lead support 410 supports the portion where the first electrode lead 330a and the second electrode lead 330b are connected, the portion where the first electrode lead 330a and the second electrode lead 330b are connected is not fixed and may have a margin for movement. Accordingly, even if the battery cell 300 swells or the battery assembly moves, damage to the electrode lead 330 may be prevented. As a result, the electrical safety of the battery assembly may be improved.

Referring to FIGS. 1 and 2, the battery assembly according to an embodiment of the present disclosure may include a case 100 and a cover 200.

The case 100 may provide a space therein. The case 100 may have a shape in which the front side and the rear side are open. Alternatively, the case 100 may have a shape that is open in the X-axis direction. The case 100 may have a rectangular parallelepiped shape.

The cover 200 may be configured as a pair. The pair of covers 200 may be coupled to the opening of the case 100. The cover 200 may be coupled to the front side and the rear side of the case 100, respectively.

The plurality of battery cells 300 and the frame 400 may be accommodated inside the case 100.

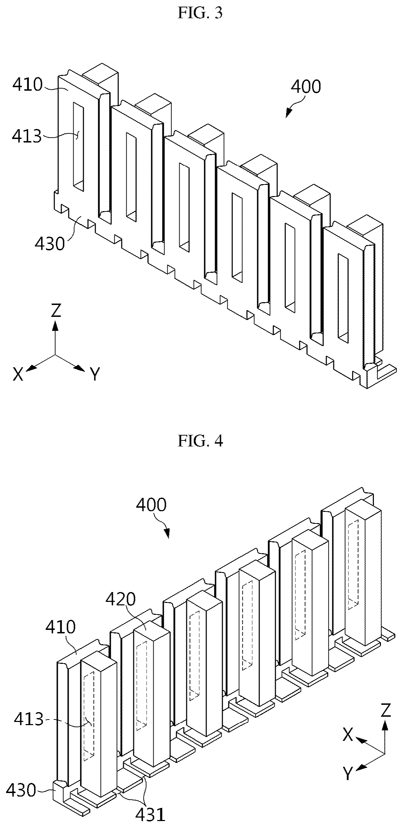

FIG. 3 is a drawing showing a frame 400 of the battery assembly according to an embodiment of the present disclosure. FIG. 4 is a drawing of the frame 400 of FIG. 3, viewed from a different direction. Referring to FIGS. 3 and 4, the frame 400 may include a lead support 410, a terrace support 420, and an accommodation portion 430. The lead support 410 and the terrace support 420 may be formed integrally. The lead support 410, the terrace support 420, and the accommodation portion 430 may also be formed integrally. Also, the frame 400 may be electrically insulating.

According to this configuration of the present disclosure, the productivity of the frame 400 may be improved. In addition, the number of parts in the battery assembly may be reduced. As a result, the economic efficiency of the battery assembly may be improved.

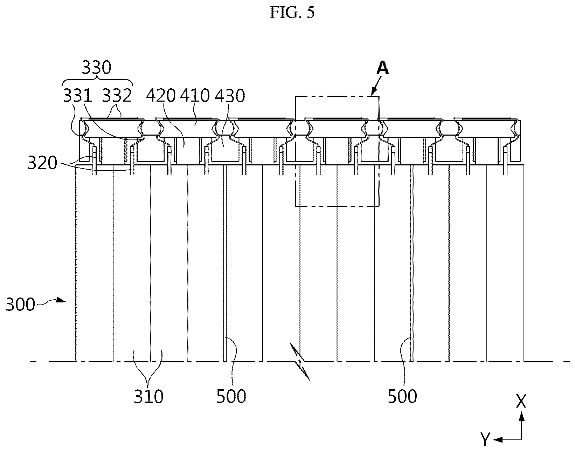

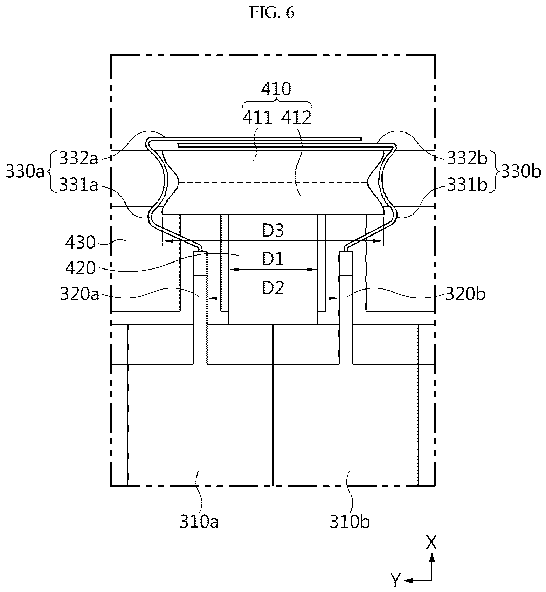

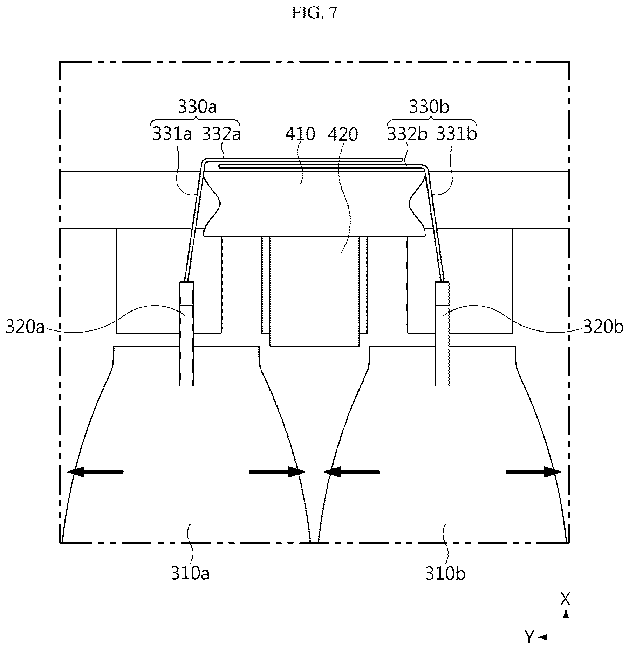

FIG. 5 is a top view showing some components of the battery assembly of the present disclosure. FIG. 6 is an enlarged drawing showing a part A of FIG. 5. FIG. 7 is an enlarged drawing showing the part A of FIG. 5 when swelling occurs.

Referring to FIGS. 3 to 7, the first electrode lead 330a of the battery assembly according to an embodiment of the present disclosure may include a first connection portion 332a and a first bending portion 331a. The first connection portion 332a may cover a front side of the lead support 410. Also, the first connection portion 332a may cover a front side of the second connection portion 332b. For example, the first connection portion 332a may be positioned perpendicular to the front and rear direction or the X-axis direction. The first bending portion 331a may connect the first connection portion 332a and the first sealing portion 320a.

The second electrode lead 330b may include a second connection portion 332b and a second bending portion 331b. The second connection portion 332b may cover a front side of the lead support 410. For example, the second connection portion 332b may be positioned perpendicular to the front and rear direction or the X-axis direction. Also, the second connection portion 332b may be positioned between the first connection portion 332a and the lead support 410. The second bending portion 331b may connect the second connection portion 332b and the second sealing portion 320b.

Also, the first connection portion 332a may be fastened, connected, coupled, attached, contacted, or fixed to the second connection portion 332b. For example, the first connection portion 332a and the second connection portion 332b may be coupled by welding.

According to this configuration of the present disclosure, the length of the battery assembly may be reduced since the first connection portion 332a and the second connection portion 332b are folded and then connected. As a result, the volume of the battery assembly may be reduced. In addition, the energy density of the battery assembly may be improved.

Referring to FIGS. 3 to 7, the lead support 410 of the battery assembly according to an embodiment of the present disclosure may support the first connection portion 332a and the second connection portion 332b. The lead support 410 may face a rear surface of the second connection portion 332b.

According to this configuration of the present disclosure, the lead support 410 may stably support the first connection portion 332a and the second connection portion 332b.

Referring to FIGS. 5 and 6, at least one of the first bending portion 331a and the second bending portion 331b of the battery assembly according to an embodiment of the present disclosure may be configured to be bent multiple times.

For example, the first bending portion 331a of the first electrode lead 330a may be bent in the right direction or the +Y-axis direction at the first sealing portion 320a. Thereafter, the first bending portion 331a may be bent in the left direction or the -Y-axis direction. Again, thereafter, the first bending portion 331a may be bent in the right direction or the +Y-axis direction. Again, thereafter, the first bending portion 331a may be bent in the left direction or the -Y-axis direction and connected to the first connection portion 332a.

Also, for example, the second bending portion 331b of the second electrode lead 330b may be bent in the left direction or the -Y-axis direction at the second sealing portion 320b. Thereafter, the second bending portion 331b may be bent in the right direction or the +Y-axis direction. Again, thereafter, the second bending portion 331b may be bent in the left direction or the -Y-axis direction. Again, thereafter, the second bending portion 331b may be bent in the right direction or the +Y-axis direction and connected to the second connection portion 332b.

According to this configuration of the present disclosure, the electrical safety of the battery cell 300 and the battery assembly may be improved. Referring to FIG. 7, swelling may occur in the first battery cell 300 and the second battery cell 300. The first accommodation portion 310a and the second accommodation portion 310b may expand in the left and right direction or the Y-axis direction. Accordingly, the first sealing portion 320a may move to the left or in the +Y-axis direction, and the second sealing portion 320b may move to the right or in the -Y-axis direction. Alternatively, due to the swelling, the distance D2 between the first sealing portion 320a and the second sealing portion 320b may increase.

At this time, since the bent portion or wrinkled portion of the first bending portion 331a is flattened, disconnection or damage of the first electrode lead 330a may be prevented. In addition, disconnection or damage of the connection portion 332 of the first electrode lead 330a and the first accommodation portion 310a may be prevented.

In addition, since the bent portion or wrinkled portion of the second bending portion 331b is flattened, disconnection or damage of the second electrode lead 330b may be prevented. In addition, disconnection or damage of the connection portion 332 of the second electrode lead 330b and the second accommodation portion 310b may be prevented.

Referring to FIGS. 3 to 6, the lead support 410 of the battery assembly according to an embodiment of the present disclosure may include a first part 411. The first part 411 may be a front portion of the lead support 410. The first part 411 may have a width that decreases in the left and right direction or the Y-axis direction as it goes rearward or in the - X-axis direction. In addition, the first bending portion 331a and the second bending portion 331b may be bent along the first part 411.

According to this configuration of the present disclosure, the first part 411 may stably support the first bending portion 331a and the second bending portion 331b. In addition, in the process of manufacturing the battery assembly, the first part 411 may support the first electrode lead 330a and the second electrode lead 330b so that the first bending portion 331a and the second bending portion 331b are bent. As a result, the electrical safety of the battery assembly may be improved.

Referring to FIGS. 3 to 6, the lead support 410 of the battery assembly according to an embodiment of the present disclosure may include a second part 412. The second part 412 may be a rear portion of the lead support 410. The second part 412 may be a portion extending rearward from the first part 411. The second part 412 may have a width that increases in the left and right direction or the Y-axis direction as it goes rearward or in the -X-axis direction. In addition, the first bending portion 331a and the second bending portion 331b may be bent along the second part 412.

According to this configuration of the present disclosure, the second part 412 may stably support the first bending portion 331a and the second bending portion 331b. In addition, in the process of manufacturing the battery assembly, the second part 412 may support the first electrode lead 330a and the second electrode lead 330b so that the first bending portion 331a and the second bending portion 331b are bent. As a result, the electrical safety of the battery assembly may be improved.

Referring to FIGS. 3 to 6, the frame 400 of the battery assembly according to an embodiment of the present disclosure may include a terrace support 420. The terrace support 420 may extend rearward from the lead support 410. The terrace support 420 may support the first sealing portion 320a and the second sealing portion 320b. Also, the terrace support 420 may be positioned between the first sealing portion 320a and the second sealing portion 320b. Also, the terrace support 420 may face the first sealing portion 320a. Also, the terrace support 420 may face the second sealing portion 320b.

According to this configuration of the present disclosure, the electrical safety of the battery cell 300 and the battery assembly may be improved. The terrace support 420 may prevent the first sealing portion 320a and the second sealing portion 320b from being excessively bent or moved due to swelling.

Referring to FIGS. 3 to 6, the terrace support 420 of the battery assembly according to an embodiment of the present disclosure may support at least one of the first accommodation portion 310a and the second accommodation portion 310b. Also, the terrace support 420 may extend rearward or in the -X-axis direction to contact at least one of the first accommodation portion 310a and the second accommodation portion 310b.

According to this configuration of the present disclosure, the electrical safety of the battery cell 300 and the battery assembly may be improved. The terrace support 420 may support the first accommodation portion 310a or the second accommodation portion 310b to be stably positioned. In addition, the terrace support 420 may prevent the first accommodation portion 310a or the second accommodation portion 310b from moving excessively due to swelling.

Referring to FIGS. 3 to 6, the width D1 of the terrace support 420 of the battery assembly according to an embodiment of the present disclosure in the left and right direction or the Y-axis direction may be smaller than the width D3 of the lead support 410 in the left and right direction or the Y-axis direction.

According to this configuration of the present disclosure, since the width D1 of the terrace support 420 is formed small, the first sealing portion 320a and the second sealing portion 320b may be positioned at the rear of the lead support 410. In addition, the first bending portion 331a and the second bending portion 331b may be easily bent, and the volume may be reduced in the left and right direction or the Y-axis direction. As a result, the electrical safety and energy density of the battery assembly may be improved.

Referring to FIGS. 3 to 6, the width D1 of the terrace support 420 of the battery assembly in the left and right direction or Y-axis direction according to an embodiment of the present disclosure may be smaller than the distance D3 between the first sealing portion 320a and the second sealing portion 320b.

According to this configuration of the present disclosure, the first sealing portion 320a and the second sealing portion 320b may have a gap that allows movement in the left and right direction or the Y-axis direction. The terrace support 420 may prevent the first sealing portion 320a and the second sealing portion 320b from excessively bending or moving while allowing the first sealing portion 320a and the second sealing portion 320b to slightly move.

Referring to FIG. 5, the battery assembly according to an embodiment of the present disclosure may include an elastic pad 500. The elastic pad 500 may be configured to correspond to an area of the accommodation portion 310. The elastic pad 500 may be positioned or fixed between the accommodation portions 310 of neighboring battery cells 300. The elastic pad 500 may contain a polyurethane material. Alternatively, the elastic pad 500 may contain a silicone material. The elastic pad 500 may be compressively deformed along the left and right direction or the Y-axis direction when the battery cell 300 is inflated due to swelling, thereby minimizing deformation of the battery assembly. In addition, the elastic pad 500 may have high heat resistance and high fire resistance. Accordingly, the elastic pad 500 may function as a barrier that prevents the transmission of venting gas or ignitable particles.

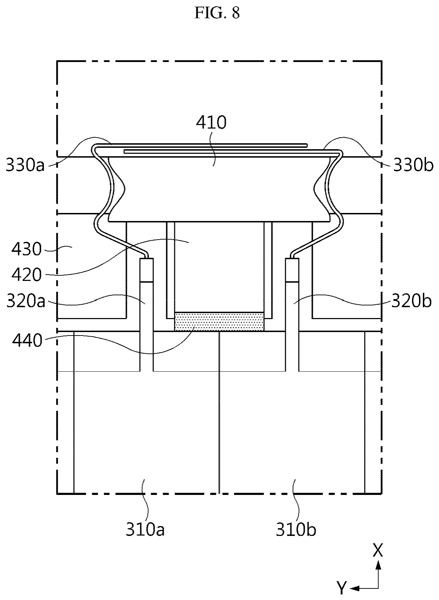

FIG. 8 is a modified embodiment of the part A of FIG. 5. Referring to FIG. 8, the battery assembly according to an embodiment of the present disclosure may further include an elastic member 440. The elastic member 440 may be positioned between the terrace support 420 and the first accommodation portion 310a. Also, the elastic member 440 may be positioned between the terrace support 420 and the second accommodation portion 310b. The elastic member 440 may be coupled, fastened, attached, or fixed to the rear surface of the terrace support 420. The elastic member 440 may contain a polyurethane material. Alternatively, the elastic member 440 may contain a silicone material. The elastic member 440 may have a pad shape extending in the vertical direction or the Z-axis direction. The elastic member 440 may support the first accommodation portion 310a or the second accommodation portion 310b.

According to this configuration of the present disclosure, the elastic member 440 may prevent the first accommodation portion 310a or the second accommodation portion 310b from moving excessively due to swelling, while reducing the shock transmitted to the first accommodation portion 310a or the second accommodation portion 310b.

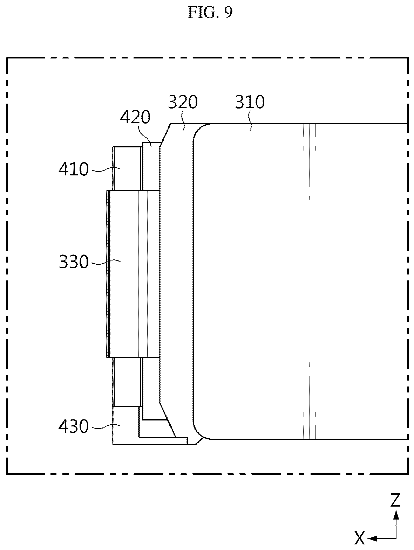

FIG. 9 is a side view showing some components of the battery assembly of FIG. 5. Referring to FIGS. 3, 4, 5, and 9, the frame 400 according to an embodiment of the present disclosure may include an accommodation portion 430. The accommodation portion 430 may be provided below the lead support 410. In addition, the accommodation portion 430 may extend rearward and may have an accommodation groove 431. For example, the accommodation groove 431 may be a slit. The accommodation groove 431 may be provided in plurality. In addition, the accommodation grooves 431 may be provided to have one-to-one relationship with the battery cells 300. The accommodation grooves 431 may be arranged along the left and right direction or the Y-axis direction. Also at least a part of the sealing portion 320 may be accommodated in the accommodation groove 431. Alternatively, a lower end of the sealing portion 320 may be accommodated in the accommodation portion 430.

According to this configuration of the present disclosure, the electrical safety of the battery cell 300 and the battery assembly may be improved. The lower end of the sealing portion 320 may protrude downward. In addition, the sealing portion 320 may protrude downward more than the accommodation portion 310. At this time, the protruding portion may be called a protrusion or a bat ear. The protrusion may be formed during the process of manufacturing the sealing portion 320. The protrusion may be protected from external impact or friction by being accommodated in the accommodation groove 431.

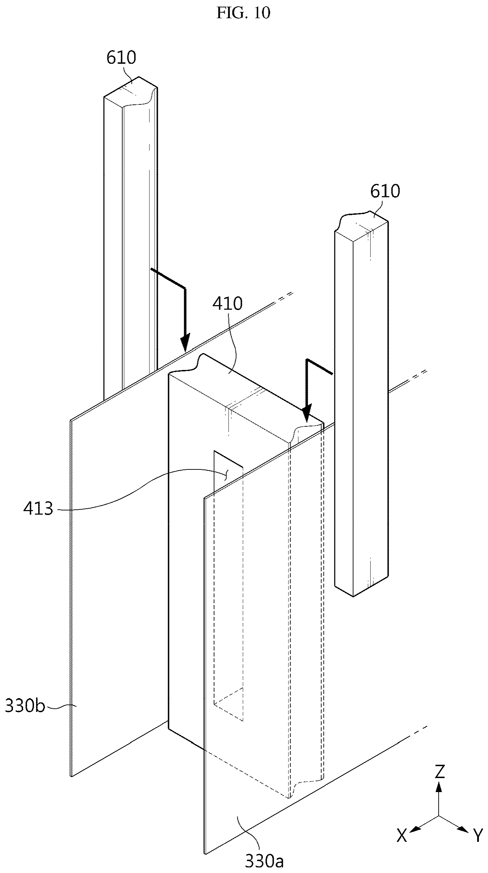

FIG. 10 is a drawing showing the alignment of a bending jig 610. Referring to FIG. 10, the first electrode lead 330a and the second electrode lead 330b according to an embodiment of the present disclosure may extend along the front and rear direction or the X-axis direction with the lead support 410 being interposed therebetween. In addition, a bending jig 610 may be arranged at the right side of the first electrode lead 330a and the left side of the second electrode lead 330b, respectively.

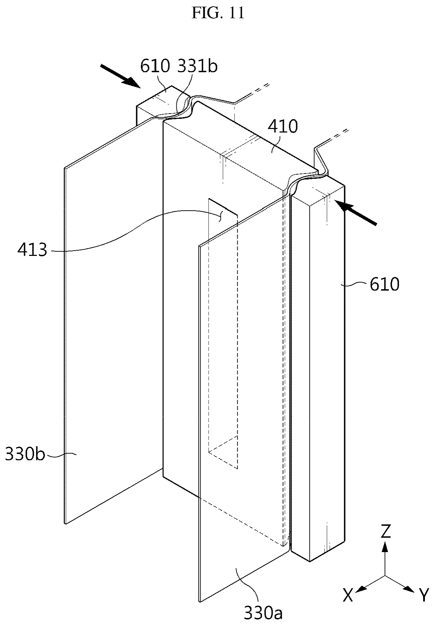

FIG. 11 is a drawing showing the bending of an electrode lead 330. Referring to FIG. 11, the bending jig 610 may press the first electrode lead 330a and the second electrode lead 330b toward the lead support 410. The first electrode lead 330a may be pressed to the left or in the -Y-axis direction. The second electrode lead 330b may be pressed to the right or in the +Y-axis direction. The first electrode lead 330a and the second electrode lead 330b may be pressed to come into close contact with the lead support 410. As a result, the first electrode lead 330a and the second electrode lead 330b may be bent according to the shape of the lead support 410.

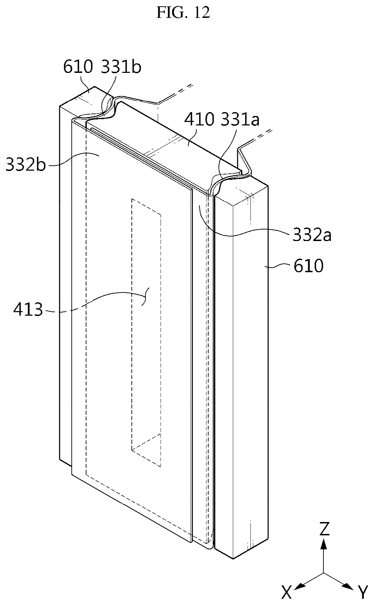

FIG. 12 is a drawing showing the folding of the electrode lead 330. Referring to FIG. 12, the portions of the first electrode lead 330a and the second electrode lead 330b extending to the front of the bending jig 610 may be folded. The first electrode lead 330a may be folded to cover 200 the front surface of the lead support 410. The folded portion of the first electrode lead 330a may form the first connection portion 332a. Also, the second electrode lead 330b may be folded to cover 200 the front surface of the first connection portion 332a of the first electrode lead 330a. The folded portion of the second electrode lead 330b may form the second connection portion 332b. At this time, the pressurization of the bending jig 610 may be maintained.

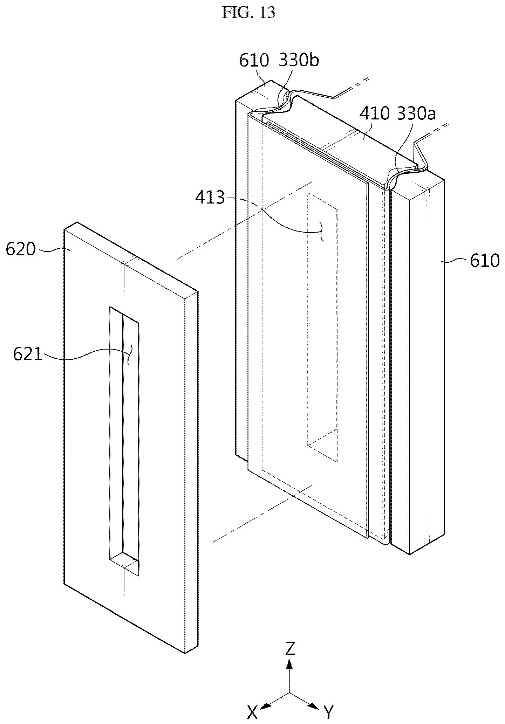

FIG. 13 is a drawing showing the alignment of a welding jig 620. Referring to FIG. 13, the welding jig 620 may be aligned to pressurize the first connection portion 332a and the second connection portion 332b. At this time, the opening 413 of the lead support 410 and the opening 621 of the welding jig 620 may be aligned to face each other. At this time, the pressurization of the bending jig 610 may be maintained.

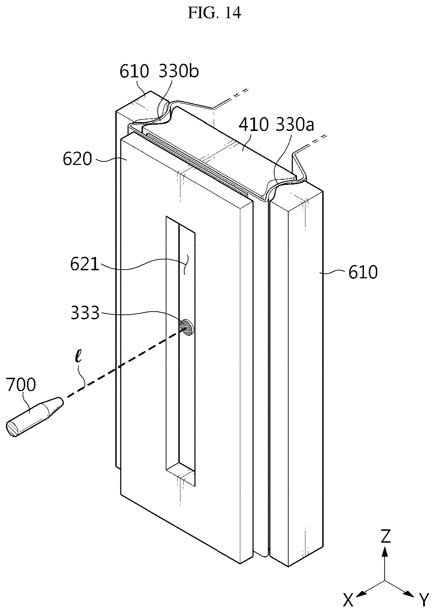

FIG. 14 is a drawing showing the welding of the electrode lead 330. Referring to FIGS. 13 and 14, the battery assembly according to an embodiment of the present disclosure may further include a welding portion 333 that couples the first connection portion 332a and the second connection portion 332b.

A laser unit 700 may irradiate light l toward the second connection portion 332b exposed through the opening 621. The laser unit 700 may form the welding portion 333. The laser unit 700 may form a plurality of welding portions 333 while moving in the upper and lower direction or the Z-axis direction.

Also, even if the laser unit 700 irradiates light l, the lead support 410 may not be damaged. Since the opening 621 of the welding jig 620 and the opening 413 of the lead support 410 face each other, the energy transmitted by the laser unit 700 may not be directly transmitted to the lead support 410.

According to this configuration of the present disclosure, the first electrode lead 330a and the second electrode lead 330b may be stably connected. In addition, even if the first electrode lead 330a and the second electrode lead 330b are coupled by welding, the lead support 410 may not be damaged.

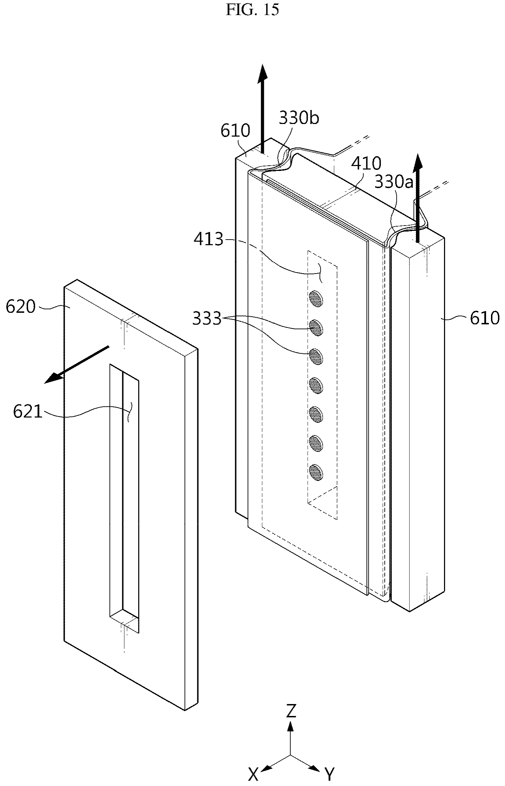

FIG. 15 is a drawing showing that the bending jig 610 and the welding jig 620 are disassembled. Referring to FIG. 15, the lead support 410 of the battery assembly according to an embodiment of the present disclosure may have an opening 413 facing the welding portion 333. The laser unit 700 may irradiate light l toward the second connection portion 332b exposed through the opening 621. In addition, since the opening 413 of the lead support 410 faces the opening 621 of the welding jig 620, the opening 413 may face the plurality of welding portions 333.

According to this configuration of the present disclosure, the first electrode lead 330a and the second electrode lead 330b may be stably connected. In addition, even if the first electrode lead 330a and the second electrode lead 330b are coupled by welding, the lead support 410 may not be damaged.

The battery assembly of the present disclosure may mean a battery module or a battery pack. When the battery assembly means a battery module, the battery assembly may further include various components, for example components of a battery module known at the time of filing of this application, such as a module case, a cooling unit, and the like.

In addition, when the battery assembly means a battery pack, the battery assembly according to the present disclosure may further include various components, for example components of the battery pack known at the time of filing of this application, such as a BMS, a bus bar, a relay, a current sensor, etc.

A vehicle according to the present disclosure may include the battery assembly according to the present disclosure described above. The battery assembly according to the present disclosure may be applied to vehicles such as electric vehicles or hybrid vehicles. In addition, the vehicle according to the present disclosure may further include various other components included in a vehicle, such as a body, a motor, and a control device like an ECU (electronic control unit), in addition to the battery assembly.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a first battery cell having a first accommodation portion configured to accommodate an electrode assembly, a first sealing portion extending forward from the first accommodation portion, and a first electrode lead protruding forward from the first sealing portion;
a second battery cell having a second accommodation portion configured to accommodate an electrode assembly, a second sealing portion extending forward from the second accommodation portion, and a second electrode lead protruding forward from the second sealing portion and physically connected to the first electrode lead; and
a frame having a lead support positioned between the first electrode lead and the second electrode lead to support a portion where the first electrode lead and the second electrode lead are connected.

2. The battery assembly according to claim 1,
wherein the first electrode lead includes:
a first connection portion configured to cover a front side of the lead support; and
a first bending portion configured to connect the first connection portion and the first sealing portion,
wherein the second electrode lead includes:
a second connection portion configured to cover the front side of the lead support;
and
a second bending portion configured to connect the second connection portion and the second sealing portion,
wherein the first connection portion is coupled to the second connection portion.

3. The battery assembly according to claim 2, further comprising:
a welding portion configured to couple the first connection portion and the second connection portion.

4. The battery assembly according to claim 3,
wherein the lead support has an opening facing the welding portion.

5. The battery assembly according to claim 2,
wherein the lead support supports the first connection portion and the second connection portion.

6. The battery assembly according to claim 2,
wherein at least one of the first bending portion and the second bending portion is configured to be bent multiple times.

7. The battery assembly according to claim 1,
wherein the frame includes a terrace support configured to extend rearward from the lead support and support the first sealing portion and the second sealing portion.

8. The battery assembly according to claim 7,
wherein the terrace support supports at least one of the first accommodation portion and the second accommodation portion.

9. The battery assembly according to claim 7,
wherein the terrace support and the lead support are formed integrally.

10. The battery assembly according to claim 8,
wherein a width of the terrace support in a left and right direction is smaller than a width of the lead support in the left and right direction.

11. The battery assembly according to claim 7, further comprising:
an elastic member located between the terrace support and the first accommodation portion.

12. The battery assembly according to claim 1,
wherein the lead support includes a first part whose width in a left and right direction decreases as it goes rearward.

13. The battery assembly according to claim 12,
wherein the lead support further includes a second part configured to extend rearward from the first part so that a width thereof in the left and right direction increases as it goes rearward.

14. The battery assembly according to claim 1,
wherein the frame includes an accommodation portion provided below the lead support and configured to extend rearward and have an accommodation groove,
wherein the first sealing portion is accommodated in the accommodation groove.

15. A battery module comprising the battery assembly according to any one of claims 1 to 14.

16. A battery pack comprising the battery assembly according to any one of claims 1 to 14.
